# EUROPEAN PATENT APPLICATION

(11) **EP 4 675 748 A1**
(43) Date of publication of application: **07.01.2026**
(21) Application number: 24763631.9
(22) Date of filing: 15.02.2024
(51) Int. Cl.: H01M 10/0587, H01M 4/13

(54) **NONAQUEOUS ELECTROLYTE SECONDARY BATTERY**

(30) Priority: 28.02.2023 JP 2023030119
(71) Applicant: Panasonic Energy Co., Ltd., Osaka 570-8511 (JP)
(72) Inventor: MORISHIMA, Hideki, Kadoma-shi, Osaka 571-0057 (JP)
(74) Representative: Novagraaf International SA
(86) International application number: PCT/JP2024/005260
(87) International publication number: WO 2024/181148

(57) **Abstract**

Disclosed is a non-aqueous electrolyte secondary battery including: a band-shaped positive electrode; a band-shaped negative electrode; a band-shaped separator; and a non-aqueous electrolyte, wherein the positive electrode and the negative electrode are wound with the separator interposed therebetween, to form an electrode assembly, the positive electrode includes a positive electrode core body, and a positive electrode mixture layer formed on a surface of the positive electrode core body, the negative electrode includes a negative electrode core body, and a negative electrode mixture layer formed on a surface of the negative electrode core body, the negative electrode mixture layer includes, on the negative electrode starting end side of the winding, a mixture starting end region that has a first length L1 along a winding direction and that is not opposed to the positive electrode mixture layer, the positive electrode includes a positive electrode starting end region that has a second length L2 along the winding direction from the positive electrode starting end of the winding and that is opposed to the negative electrode, a first width W1 of the positive electrode starting end is smaller than a maximum second width W2 of the positive electrode excluding the positive electrode starting end, and the first length L1 is a length of 0.4 turns or more and 0.8 turns or less from the negative electrode starting end side.

## Description

### Cross Reference To Related Application

The present disclosure is based upon and claims the benefit of priority from the corresponding Japanese Patent Application No. 2023-030119 filed on February 28, 2023, the entire content of which is incorporated herein by reference.

### [Technical Field]

The present disclosure relates to a non-aqueous electrolyte secondary battery.

### [Background Art]

Patent Literature 1 proposes, "a sheet-shaped electrode for a battery, the battery produced by housing, in a battery can, a spirally wound electrode group formed by winding a sheet-shaped electrode and a sheet-shaped separator, wherein both ends in a width direction of at least one end portion of the sheet-shaped electrode in a longitudinal direction thereof are formed by an angle or a curve of more than 90°".

Patent Literature 2 proposes "a non-aqueous electrolyte battery comprising an electrode group in which a band-shaped positive electrode and a band-shaped negative electrode are wound in the form of a flat coil with a separator interposed therebetween, and a non-aqueous electrolyte supported by the electrode group, the negative electrode including: a negative electrode current collector made of aluminum or an aluminum alloy; a negative electrode active material-containing layer that is formed on the negative electrode current collector excluding at least both end portions in a width direction of the current collector and that contains a negative electrode active material providing a negative electrode average working potential higher than a lithium alloying potential of aluminum; and a top portion gradually decreased in width towards an apex of the top portion on one end of the current collector in a length direction of the current collector, the apex of the top portion being located at a position corresponding to one-half of a maximum width of the negative electrode active material-containing layer, and the top portion having a shape symmetric with respect to the position, wherein the top portion of the negative electrode is disposed between a winding start portion of the positive electrode and a portion of the positive electrode that is wound one turn after the winding start portion such that the apex is located rearward of the winding start portion."

Patent Literature 3 proposes "a battery comprising: a case having an accommodation space therein; an electrode assembly disposed in the accommodation space of the case and including a plurality of electrode plates each including a mixture containing an active material and a substrate; and a separator, wherein at least one of the plurality of electrode plates, or the separator has a wide portion and a narrow portion having widths different from each other in a direction perpendicular to a longitudinal direction of the electrode assembly or the separator."

### [Citation List]

### [Patent Literatures]

Patent Literature 1: Japanese Laid-Open Patent Publication No. H10-270014
Patent Literature 2: Japanese Laid-Open Patent Publication No. 2008-251256
Patent Literature 3 :Japanese Laid-Open Patent Publication No. 2015-008094

### [Summary of Invention]

### [Technical Problem]

When an electrode assembly formed by winding a positive electrode and a negative electrode includes, at a winding start portion thereof, a long negative electrode region that is not opposed to the positive electrode, electrode deformation may occur in the vicinity of a positive electrode starting end with the progression of charge-discharge cycling, resulting in variations in the charging depth in the planes of the electrode plates.

On the other hand, when the electrode assembly includes a short mixture starting end region that is not opposed to the positive electrode, the positive electrode starting end approaches a pin used in a winding step, so that the clinging thereto of the positive electrode becomes relatively significant, which may increase the occurrences of pin extraction failure.

### [Solution to Problem]

An aspect of the present disclosure relates to a non-aqueous electrolyte secondary battery including: a band-shaped positive electrode; a band-shaped negative electrode; a band-shaped separator; and a non-aqueous electrolyte, wherein the positive electrode and the negative electrode are wound with the separator interposed therebetween, to form an electrode assembly, the positive electrode includes a positive electrode core body, and a positive electrode mixture layer formed on a surface of the positive electrode core body, the negative electrode includes a negative electrode core body, and a negative electrode mixture layer formed on a surface of the negative electrode core body, the negative electrode mixture layer includes, on the negative electrode starting end side of the winding, a mixture starting end region that has a first length L1 along a winding direction and that is not opposed to the positive electrode mixture layer, the positive electrode includes a positive electrode starting end region that has a second length L2 along the winding direction from the positive electrode starting end of the winding and that is opposed to the negative electrode, a first width W1 of the positive electrode starting end is smaller than a maximum second width W2 of the positive electrode excluding the positive electrode starting end, and the first length L1 is a length of 0.4 turns or more and 0.8 turns or less from the negative electrode starting end side.

### [Advantageous Effects of Invention]

According to the present disclosure, it is possible to suppress pin extraction failure during a winding step, while suppressing the deformation of positive and negative electrodes in the vicinity of a positive electrode starting end with the progression of charge-discharge cycling.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawings]

[FIG. 1] A plan view conceptually showing a relative positional relationship between starting regions of a positive electrode and a negative electrode of an electrode assembly.
[FIG. 2] A plan view conceptually showing a modification of the shape of a positive electrode starting end.
[FIG. 3] A plan view conceptually showing other modifications of the shape of a positive electrode starting end.
[FIG. 4] A vertical cross-sectional view schematically showing an example of a non-aqueous electrolyte secondary battery according to an embodiment of the present disclosure.

### [Description of Embodiments]

In the following, embodiments according to the present disclosure will be described by way of examples. However, the embodiments according to the present disclosure are not limited to the examples described below. Although examples of specific numerical values and materials may be given in the following description, other numerical values and materials may be used as long as the invention according to the present disclosure can be practiced. In the present specification, the expression "a numerical value A to a numerical value B" includes the numerical value A and the numerical value B, and can be replaced with "a numerical value A or more and a numerical value B or less." In the case where lower limits and upper limits are given as examples for numerical values relating to specific physical properties or conditions in the following description, any of the given lower limits and any of the given upper limits can be freely combined as long as the lower limit is not greater than or equal to the upper limit.

The present disclosure encompasses combinations of matters recited in two or more claims freely selected from a plurality of claims recited in the appended claims. That is, matters recited in two or more claims freely selected from a plurality of claims recited in the appended claims can be combined as long as there are no technical discrepancies.

### (Non-Aqueous Electrolyte Secondary Battery)

A non-aqueous electrolyte secondary battery according to an embodiment of the present disclosure includes a band-shaped positive electrode, a band-shaped negative electrode, a band-shaped separator, and a non-aqueous electrolyte. The positive electrode and the negative electrode are wound with the separator interposed therebetween, to form an electrode assembly. The non-aqueous electrolyte has lithium ion conductivity, for example.

The negative electrode includes a negative electrode core body (negative electrode current collector), and a negative electrode mixture layer formed on a surface of the negative electrode core body. The negative electrode mixture layer is formed on one surface or both surfaces of the negative electrode core body. The negative electrode mixture layer may be formed on the surface of the negative electrode core body from the negative electrode starting end. Alternatively, the negative electrode may include a core body exposed portion that does not include the negative electrode mixture layer and that is located on the inner layer side than a mixture starting end region.

The positive electrode includes a positive electrode core body (positive electrode current collector), and a positive electrode mixture layer formed on a surface of the positive electrode core body. The positive electrode mixture layer is formed on one surface or both surface of the positive electrode core body. The positive electrode mixture layer may be formed on the surface of the positive electrode core body from a positive electrode starting end. This makes it easier to secure a high battery capacity.

The negative electrode mixture layer includes, on the negative electrode starting end side of the winding, a mixture starting end region that has a first length L1 along the winding direction and that is not opposed to the positive electrode mixture layer. The mixture starting end region is a non-opposed portion that is not opposed to the positive electrode mixture layer with the separator interposed therebetween. The first length L1 (i.e., the length of the non-opposed portion) is a length of 0.4 turns or more and 0.8 turns or less from the negative electrode starting end side of the winding. That is, the mixture starting end region constitutes a part of the innermost turn (the first turn) of the wound negative electrode mixture layer. Assuming that the length of one turn is the length from the negative electrode starting end side of the negative electrode mixture layer to the end of the first turn (i.e., immediately before being opposed to the second turn), the ratio of the length not opposed to the positive electrode mixture layer to the length of one turn is determined, and thus the first length L1 is determined.

The starting end of the winding of the separator may be located on the central side of the electrode assembly relative to the negative electrode starting end.

The positive electrode includes a positive electrode starting end region that has a second length L2 along the winding direction from the positive electrode starting end of the winding and that is opposed to the negative electrode. A first width W1 of the positive electrode starting end is smaller than a maximum second width W2 of the positive electrode excluding the positive electrode starting end. The first width W1 and the second width W2 are dimensions in a direction perpendicular to the longitudinal direction of the band-shaped positive electrode. The first width W1 may be the minimum width of the positive electrode. The second width W2 is a width of the positive electrode excluding the positive electrode starting end region, and is the width of a majority of the positive electrode excluding the positive electrode starting end region. In other words, the positive electrode starting end region is a region having a width smaller than the second width W2 in the vicinity of the positive electrode starting end.

When it is assumed that the first length L1 of the mixture starting end region that is not opposed to the positive electrode mixture layer is a length of 0.4 turns or more and 0.8 turns or less, the first length L1 is sufficiently short, so that the deformation of the positive and negative electrodes in the vicinity of the positive electrode starting end with the progression of the charge-discharge cycling is suppressed. The deformation of the positive and negative electrodes is more likely to occur at a central portion than at both end portions of the electrodes in the width direction. When the first length L1 is a length of 0.8 turns or less, the first length is sufficiently short, so that the stress due to charging and discharging is more easily relieved to a central portion of the electrode assembly, and the accumulation of stress on the central portion in the width direction of the electrodes is reduced.

However, when the first length L1 is reduced to a length of less than 0.4 turns, the positive electrode starting end approaches a pin used in a winding step, and the clinging thereto of the positive electrode become relatively significant, so that pin extraction failure is more likely to occur in the winding step.

In contrast, in a case where the first width W1 of the positive electrode starting end is reduced to be smaller than the maximum second width W2 of the positive electrode excluding the positive electrode starting end, the clinging of the positive electrode starting end to the pin is reduced, thus making it possible to suppress the occurrence of pin extraction failure.

From the viewpoint of suppressing pin extraction failure, the ratio (W1/W2 ratio) of the first width W1 to the second width W2 is preferably, for example, 0.3 or more and 0.7 or less. By reducing the W1/W2 ratio to 0.7 or less, it is possible to significantly suppress the occurrence of pin extraction failure. On the other hand, from the viewpoint of suppressing the deformation of the positive and negative electrodes in the vicinity of the positive electrode starting end with the progression of charge-discharge cycling, it is preferable that the W1/W2 ratio is 0.3 or more.

The shape of the positive electrode starting end region may have a first side at the positive electrode starting end that has a first width W1 perpendicular to the longitudinal direction of the positive electrode, and two second sides extending from both ends of the first side toward the finishing end of the winding. The shape of the positive electrode starting end region may have two third sides extending parallel to the first side from distal ends of the two second sides, respectively. The third sides are connected with two longer sides extending along the longitudinal direction of a major portion of the positive electrode. The shape of the positive electrode starting end region may be, for example, a trapezoidal shape, a rectangular shape, or the like. The two second sides may have the same length, and the two third sides may have the same length.

The connecting portion between the first side and each of the second sides may be chamfered. The connecting portion between each of the second sides and the corresponding third side may be curved. The connecting portion between each of the third sides and the corresponding major side of the positive electrode along the longitudinal direction may be chamfered. The chamfering may be R-chamfering or C-chamfering. The shape of the positive electrode starting end region may be, for example, a trapezoidal shape with rounded corners, a rectangular shape with rounded corners, or the like.

The second length L2 along the winding direction of the positive electrode starting end region that satisfies W2 > W1 may be a length of 0.2 turns or more from the positive electrode starting end. However, the second length L2 is preferably as short as possible within a range that can suppress pin extraction failure. For example, the second length L2 may be a length of one turn or less. This makes it easier to secure a high battery capacity while significantly suppressing the occurrence of pin extraction failure.

Note that the definition for the turn length is the same as that for the first length L1, and the second length L2 is determined assuming that the length of one turn is the length from the negative electrode starting end side of the negative electrode mixture layer to the end of the first turn.

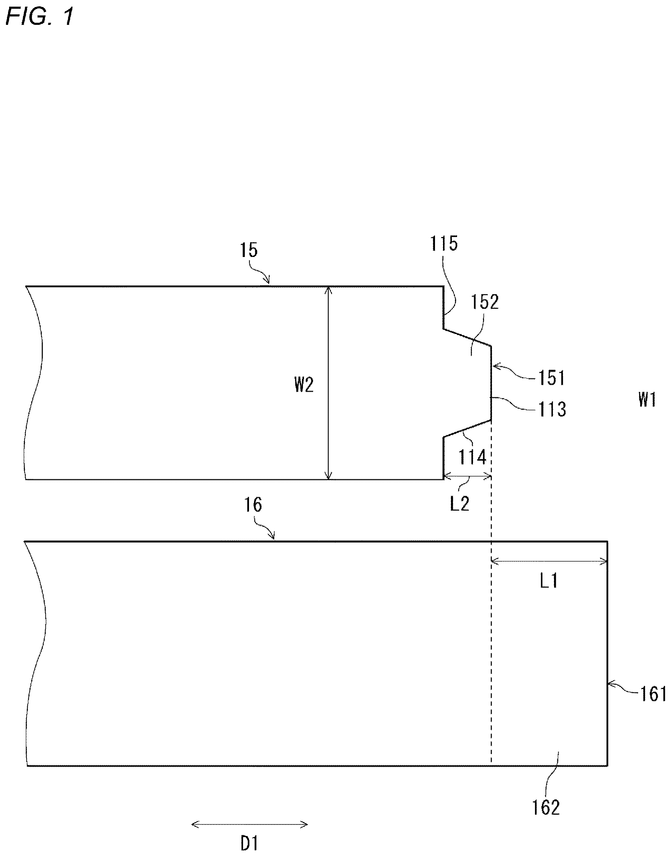

FIG. 1 conceptually shows, in a plan view, a relative positional relationship between starting regions of a positive electrode and a negative electrode of an electrode assembly. In FIG. 1, the starting end of the winding corresponds to a right end portion, and the finishing end thereof corresponds to a left end portion. A band-shaped positive electrode 15, a band-shaped negative electrode 16, and band-shaped separators (not shown) are wound along the longitudinal direction, to form a columnar electrode assembly. As the separators, a pair of separators are arranged so as to sandwich the positive electrode or the negative electrode therebetween.

In the negative electrode 16 in the illustrated example, a negative electrode mixture layer is formed from a negative electrode starting end 161. The negative electrode 16 includes a mixture starting end region 162 that has a first length L1 along a winding direction D1 and that is not opposed to the positive electrode 15. The first length L1 of the mixture starting end region 162 is a length of 0.4 turns or more and 0.8 turns or less from the negative electrode starting end 161.

In the positive electrode 15 as well, a positive electrode mixture layer is formed from a positive electrode starting end 151. The positive electrode 15 includes a positive electrode starting end region 152 that has a second length L2 along the winding direction D1 and that is opposed to the negative electrode 16.

The shape of the positive electrode starting end region 152 has a first side 113 at the positive electrode starting end that has a first width W1, two second sides 114 extending obliquely from both ends of the first side 113 toward the finishing end side of the winding, and two third sides 115 extending parallel to the first side 113 from distal ends of the two second sides 114, respectively. The third sides 115 are connected with two longer sides of a major portion of the positive electrode 15 along the longitudinal direction. The shape of the positive electrode starting end region 112 is a substantially trapezoidal shape. From the viewpoint of suppressing pin extraction failure, the ratio (W1/W2 ratio) of the first width W1 to the second width W2 is set to 0.3 or more and 0.7 or less. The second length L2 along the winding direction D1 of the positive electrode starting end region 152 that satisfies W2> W1 has a length of 0.2 turns or more from the positive electrode starting end 151.

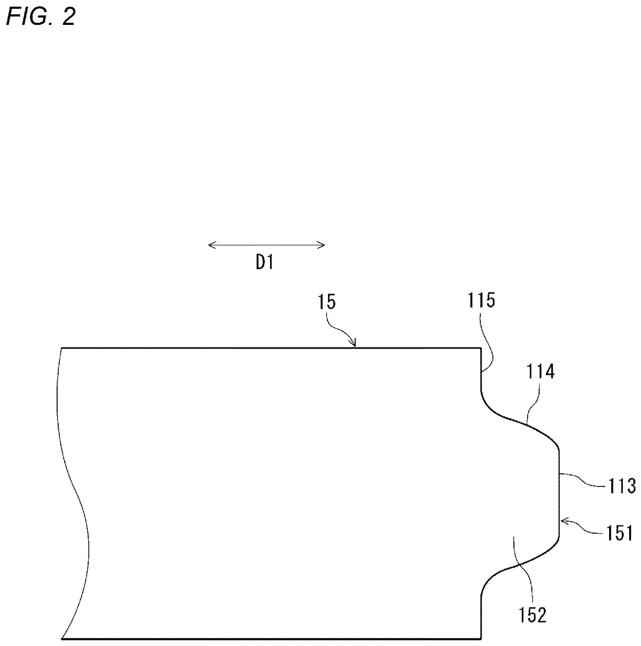

FIG. 2 is a plan view conceptually showing a modification of the shape of the positive electrode starting end. In FIG. 2, the connecting portion between the first side 113 and each of the second sides 114 is R-chamfered, and the connecting portion between each of the second sides 114 and the corresponding third side 115 is curved or has an arc shape. The connecting portion between each of the third side 115 and the corresponding longer side of a major portion of the positive electrode in the longitudinal direction is R-chamfered.

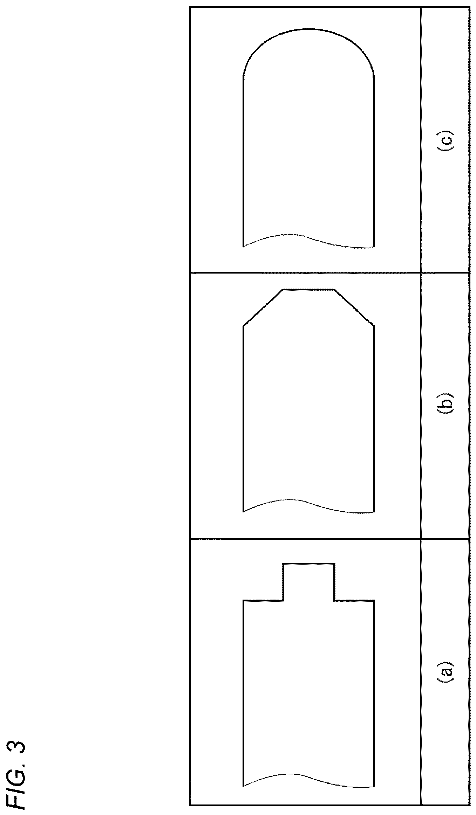

FIG. 3 shows a plan view conceptually showing other modifications of the shape of the positive electrode starting end. The shape of the positive electrode starting end region shown in (a) of FIG. 3 is a substantially rectangular shape, the shape of the positive electrode starting end region shown in (b) of FIG. 3 is a shape formed by simply chamfering corners, and the shape of the positive electrode starting end region shown in (c) of FIG. 3 is a shape formed by further chamfering the corners of the shape shown in (b) of FIG. 3, and has a substantially arc shape. Note that the shape of the positive electrode starting end varies widely, and is not limited to the illustrated examples.

A non-aqueous electrolyte secondary battery according to the present disclosure may be a liquid secondary battery including an electrolytic solution as the electrolyte, or an all-solid-state secondary battery including a solid electrolyte as the electrolyte. In the following, the configuration of a secondary battery will be specifically described, taking a lithium ion secondary battery as an example.

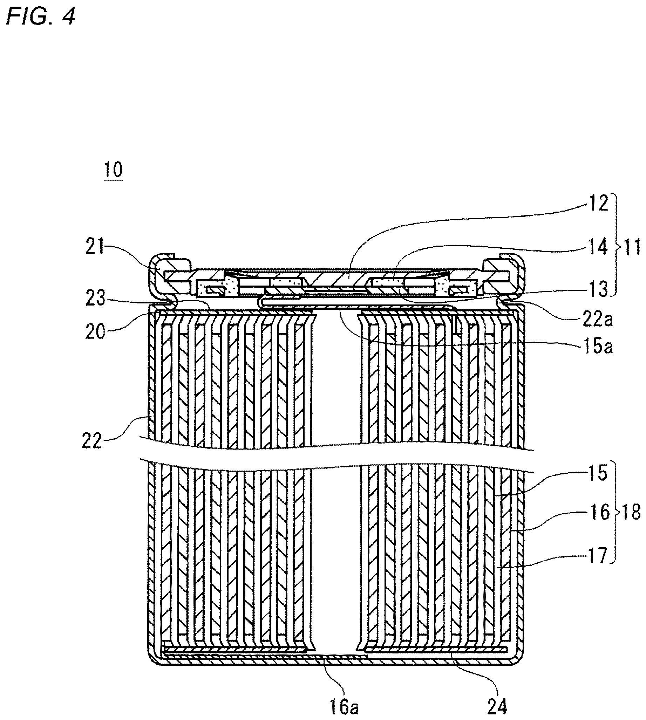

FIG. 4 is a vertical cross-sectional view of a cylindrical lithium ion secondary battery as an example of an embodiment of the present disclosure. However, the present disclosure is not limited to the following configuration.

A secondary battery 10 includes an electrode assembly 18, an electrolytic solution (not shown), and a bottomed cylindrical battery can 22 accommodating the electrode assembly 18 and the electrolytic solution. A sealing body 11 is crimped to an opening of the battery can 22 with a gasket 21 interposed therebetween. Thus, the interior of the battery is sealed. The sealing body 11 includes a valve body 12, a metal plate 13, and an annular insulating member 14 interposed between the valve body 12 and the metal plate 13. The valve body 12 and the metal plate 13 are connected to each other at their respective central portions. A positive electrode lead 15a led out from a positive electrode 15 is connected to the metal plate 13. Accordingly, the valve body 12 functions as an external terminal of the positive electrode. A negative electrode lead 16a led out from a negative electrode 16 is connected to the inner surface of the bottom of the battery can 22. An annular groove part 22a is formed in the vicinity of an opening edge of the battery can 22. A first insulating plate 23 is disposed between one end face of the electrode assembly 18 and the annular groove part 22a. A second insulating plate 24 is disposed between the other end face of the electrode assembly 18 and the bottom of the battery can 22. The electrode assembly 18 is formed by winding the positive electrode 15 and the negative electrode 16 with a separator 17 interposed therebetween.

### [Positive Electrode]

A positive electrode having the above-described features is used as the positive electrode. The positive electrode includes a positive electrode core body (current collector) and a positive electrode mixture layer. The positive electrode mixture layer is formed of a positive electrode mixture. The positive electrode mixture includes a positive electrode active material as an essential component, and may include optional components. A binder, a conductive aid, a thickener, and the like may be included as the optional components.

The thickness of the positive electrode mixture layer is not particularly limited, and may be, for example, 50 µm or more and 150 µm or less, or may be 75 µm or more and 125 µm or less.

An average particle diameter (D50) of particles of the positive electrode active material is, for example, 1 µm or more and 50 µm or less, and may be 5 µm or more and 25 µm or less. The average particle diameter (D50) refers to a median diameter at 50% cumulative volume in a volume-based particle size distribution.

The positive electrode active material may include a lithium-containing transition metal oxide. From the viewpoint of increasing the capacity, it is preferable that the lithium-containing transition metal oxide includes a lithium nickel oxide (composite oxide N) including lithium and Ni and having a layered rock-salt crystal structure. The proportion of the composite oxide N in the positive electrode active material is, for example, 70 mass% or more, 90 mass% or more, or 95 mass% or more. The proportion of Ni in metallic elements included in the composite oxide N, other than Li, may be 50 atom% or more.

The composite oxide N is represented, for example, by the formula (1): Li_{α}Niₓ₁M1ₓ₂M2₍₁₋ₓ₁₋ₓ₂₎O_{2+β}. Here, the element M1 is at least one selected from the group consisting of V, Co, and Mn. The element M2 is at least one selected from the group consisting of Mg, Al, Ca, Ti, Cu, Zn, and Nb. The formula (1) satisfies 0.95 ≤ α ≤ 1.05, -0.05 ≤ β ≤ 0.05, 0.5 ≤ x1 < 1, 0 ≤x2 ≤ 0.5, 0 < 1- x1- x2 ≤ 0.5. The value of α increases or decreases through charging and discharging.

The composite oxide N includes Ni, and may also include, as the element M1 and the element M2, at least one selected from the group consisting of Co, Mn, and Al. Co, Mn, and Al contribute to the stabilization of the crystal structure of the composite oxide N.

The composite oxide N may be represented, for example, by the formula (2): Li_{α}Ni_{(1-y1-y2-y3-z})C_{oy1}Mn_{y2}Al_{y3}M_{z}O_{2+β}. The element M is an element other than Li, Ni, Co, Mn, Al, and oxygen, and may be at least one selected from the group consisting of Ti, Zr, Nb, Mo, W, Fe, Zn, B, Si, Mg, Ca, Sr, Sc, and Y. Note, however, that the formula (2) satisfies 0.95 ≤ α ≤ 1.05, -0.05 ≤ β ≤ 0.05, 0 ≤ y1 ≤ 0.1, 0 ≤ y2 ≤ 0.1, 0 ≤ y3 ≤ 0.1, and 0 ≤ z ≤ 0.10. The value of 1 - y1 - y2- y3 - z (=v), which represents the atomic ratio of Ni, is, for example, 0.8 or more, and may be 0.85 or more, or may be 0.90 or more, or 0.95 or more. The value of v, which represents the atomic ratio of Ni, may be 0.98 or less, or 0.95 or less.

A sheet-shaped conductive material (metal foil, mesh, net, punched sheet, etc.) can be used as the positive electrode core body. Among these, a metal foil is preferred. Examples of the material of the positive electrode core body include stainless steel, aluminum, an aluminum alloy, and titanium. The thickness of the positive electrode core is not particularly limited, and is, for example, 1 to 50 µm, and may be 5 to 30 µm.

### [Negative Electrode]

A negative electrode having the above-described features is used as the negative electrode. The negative electrode includes a negative electrode core body (current collector) and a negative electrode mixture layer.

The negative electrode mixture layer is formed of a negative electrode mixture. The negative electrode mixture includes a negative electrode active material as an essential component, and may include optional components. A binder, a conductive aid, a thickener, and the like may be included as the optional components. In place of the negative electrode mixture layer, a lithium metal foil or a lithium alloy foil may be attached to the surface of the negative electrode core body.

The negative electrode active material includes a material that electrochemically absorbs and desorb lithium ions, a lithium metal, a lithium alloy, and the like. A carbon material, an alloy-based material, and the like can be used as the material that electrochemically absorbs and desorbs lithium ions. Examples of the carbon material include graphite, graphitizable carbon (soft carbon), and non-graphitizable carbon (hard carbon). Preferred among these is graphite, which exhibits excellent stability during charging and discharging and also has a small irreversible capacity. Examples of the alloy-based material include at least one metal capable of forming an alloy with lithium, and specific examples thereof include silicon, tin, a silicon alloy, a tin alloy, and a silicon compound. Silicon oxide, tin oxide, and the like may be used, and other silicon-containing materials may be used.

A non-porous conductive substrate (metal foil, etc.) or a porous conductive substrate (mesh, net, punched sheet, etc.) is used as the negative electrode core body. Examples of the material of the negative electrode core body include stainless steel, nickel, a nickel alloy, copper, and a copper alloy.

### [Separator]

The separator has a high ion permeability, as well as appropriate mechanical strength and insulating properties. Examples of the separator include a microporous thin film, a woven fabric, and a non-woven fabric. For example, a polyolefin such as polypropylene and polyethylene may be used as the material of the separator.

The thickness of the separator may be, for example, 5 µm to 25 µm.

The separator may include a substrate layer, and a heat-resistant layer stacked on the substrate layer. A microporous thin film, a woven fabric, a non-woven fabric, or the like may be used as the substrate layer. The heat-resistant layer may be provided on at least one surface of the substrate layer. Preferably, the heat-resistant layer is provided on at least the positive electrode side of the separator.

The heat-resistant insulating layer may include an inorganic oxide filler as a main component (e.g., 80 mass% or more of the heat-resistant layer), or a heat-resistant resin as a main component (e.g., 40 mass% or more of the heat-resistant layer). A polyamide resin such as aromatic polyamide (aramid), a polyimide resin, a polyamide imide resin, or the like may be used as the heat-resistant resin.

### [Non-Aqueous Electrolyte]

The non-aqueous electrolyte of the lithium ion secondary battery has lithium ion conductivity. The non-aqueous electrolyte may be a liquid electrolyte (electrolytic solution), or a solid electrolyte.

For example, a solid or gelled polymer electrolyte, an inorganic solid electrolyte, or the like can be used as the solid electrolyte. Materials (e.g., an oxide-based solid electrolyte, a sulfide-based solid electrolyte, a halogen-based solid electrolyte, etc.) known for an all-solid-state lithium ion secondary battery and the like can be used for the inorganic solid electrolyte. The polymer electrolyte includes, for example, a lithium salt and a matrix polymer, or a matrix polymer, a non-aqueous solvent and a lithium salt. For example, a polymer material that absorbs and gelatinizes the non-aqueous solvent is used as the matrix polymer. Examples of the polymer material include a fluorocarbon resin, an acrylic resin, and a polyether resin.

The electrolytic solution includes a non-aqueous solvent and an electrolyte salt. In the case of a lithium ion secondary battery, the electrolyte salt includes at least a lithium salt. The concentration of the lithium salt in the electrolytic solution is, for example, 0.5 mol/L or more and 2 mol/L or less. The non-aqueous electrolytic solution may contain a known additive.

For example, a cyclic carbonic acid ester, a chain carbonic acid ester, a cyclic carboxylic acid ester, or the like can be used as the non-aqueous solvent. Examples of the cyclic carbonic acid ester include propylene carbonate (PC) and ethylene carbonate (EC). Examples of the chain carbonic acid ester include diethyl carbonate (DEC), ethyl methyl carbonate (EMC), and dimethyl carbonate (DMC). Examples of the cyclic carboxylic acid ester include γ-butyrolactone (GBL) and γ-valerolactone (GVL). The non-aqueous solvent may be used alone, or in combination of two or more thereof.

Examples of the lithium salt include lithium salts of chlorine-containing acid (LiClO₄, LiAlCl₄, LiB₁₀Cl₁₀, etc.), lithium salts of fluorine-containing acid (LiPF₆, LiBF₄, LiSbF₆, LiAsF₆, LiCF₃SO₃, LiCF₃CO₂, etc.), lithium salts of fluorine-containing acid imide (LiN(SO₂F)₂, LiN(CF₃SO₂)₂, LiN(CF₃SO₂)(C₄F₉SO₂), LiN(C₂F₅SO₂)₂, etc.), and lithium halides (LiCl, LiBr, LiI, etc). The lithium salt may be used alone, or in combination of two or more thereof.

### (Supplementary Note)

The foregoing description discloses the following techniques.

### (Technique 1)

A non-aqueous electrolyte secondary battery including:
a band-shaped positive electrode; a band-shaped negative electrode; a band-shaped separator; and a non-aqueous electrolyte, wherein
the positive electrode and the negative electrode are wound with the separator interposed therebetween, to form an electrode assembly,
the positive electrode includes a positive electrode core body, and a positive electrode mixture layer formed on a surface of the positive electrode core body,
the negative electrode includes a negative electrode core body, and a negative electrode mixture layer formed on a surface of the negative electrode core body,
the negative electrode mixture layer includes, on the negative electrode starting end side of the winding, a mixture starting end region that has a first length L1 along a winding direction and that is not opposed to the positive electrode mixture layer,
the positive electrode includes a positive electrode starting end region that has a second length L2 along the winding direction from the positive electrode starting end of the winding and that is opposed to the negative electrode,
a first width W1 of the positive electrode starting end is smaller than a maximum second width W2 of the positive electrode excluding the positive electrode starting end, and
the first length L1 is a length of 0.4 turns or more and 0.8 turns or less from the negative electrode starting end side.

### (Technique 2)

The non-aqueous electrolyte secondary battery according to technique 1, wherein the positive electrode mixture layer is formed on the surface of the positive electrode core body from the positive electrode starting end.

### (Technique 3)

The non-aqueous electrolyte secondary battery according to technique 1 or 2, wherein a ratio:W1/W2 of the first width W1 to the second width W2 is 0.3 or more and 0.7 or less.

### (Technique 4)

The non-aqueous electrolyte secondary battery according to any one of techniques 1 to 3, wherein the second length L2 along the winding direction of the positive electrode starting end region that satisfies W2 > W1 is a length of 0.2 turns or more from the positive electrode starting end.

### [Examples]

The present disclosure will be more specifically described below with reference to examples. However, the present disclosure is not limited to the following examples.

### <Example 1>

### [Production of Positive Electrode]

With 100 parts by mass of LiNi_{0.88}Co_{0.09}Al_{0.03}O₂, 1 part by mass of acetylene black (AB) and 0.9 parts by mass of polyvinylidene fluoride (PVDF) were mixed, and an appropriate amount of N-methyl-2-pyrrolidone (NMP) was added thereto, to prepare a positive electrode mixture slurry. Next, the positive electrode mixture slurry was applied to both surfaces of an aluminum foil having a thickness of 15 µm, and the resulting coating film was dried. Then, the coating film was rolled using a roller, and thereafter cut into a predetermined electrode size, to produce a positive electrode including positive electrode mixture layers formed on both surfaces of a positive electrode core body.

The shape of the positive electrode starting end region is a trapezoidal shape as shown in FIGS. 1 and 2, and includes a central first side having a first width, two second sides having the same length, and two third sides having the same lengths. The ratio W1/W2 of a first width W1 to a second width W2 (i.e., the length of a majority of the positive electrode in the transverse direction) is 0.3. A second length L2 of a positive electrode starting end region along the winding direction is designed to be a length of 0.2 turns. Note that the positive electrode mixture layer is formed from a positive electrode starting end.

A positive electrode core body-exposed portion where the positive electrode mixture layer was not formed was provided at a central portion of the positive electrode in the longitudinal direction, and a positive electrode lead made of aluminum was welded to the exposed portion.

### [Production of Negative Electrode]

With 92 parts by mass of graphite powder, 6 parts by mass of a Si-based material, 1 part by mass of carboxymethyl cellulose sodium (CMC-Na), 1 part by mass of a styrene-butadiene rubber (SBR) were mixed, and an appropriate amount of water was added thereto, to prepare a negative electrode mixture slurry. Next, the negative electrode mixture slurry was applied to both surfaces of a copper foil having a thickness of 8 µm, and the resulting coating film was dried. Then, the coating film was rolled using a roller, and thereafter cut into a predetermined electrode size, to produce a negative electrode including negative electrode mixture layers formed on both surfaces of a negative electrode core body.

Negative electrode core body-exposed portions where the negative electrode mixture layer was not formed were provided at both end portions of the negative electrode in the longitudinal direction, and a negative electrode lead made of nickel was welded to one of the exposed portions.

### [Production of Electrode Assembly]

The positive electrode and the negative electrode were spirally wound with a separator interposed therebetween, to produce a wound electrode assembly. The negative electrode lead was disposed on the winding starting side. The separator includes a substrate layer formed by a polyethylene microporous thin film having a thickness of 10 µm, and a 4 µm-thick heat-resistant layer stacked on one surface (the positive electrode side) of the substrate layer.

The number of times of winding of the electrode assembly, based on the positive electrode, was 18. A first length L1 of a mixture starting end region of the negative electrode that is not opposed to the positive electrode mixture layer is a length of 0.8 turns.

### [Preparation of Non-Aqueous Electrolyte]

LiPF₆ was dissolved at a concentration of 1.0 mol/L in a solvent mixture including ethylene carbonate (EC) and diethyl carbonate (DEC) at a volume ratio of 3:7, to prepare a non-aqueous electrolyte.

### [Production of Secondary Battery]

The electrode assembly was inserted into an exterior member made of an aluminum laminate film, and the whole was vacuum dried at 105°C for 2 hours. Thereafter, the non-aqueous electrolyte was injected into the exterior member, and the opening of the exterior member was sealed, to obtain a battery A1.

### <Example 2>

A battery A2 was produced in the same manner as in Example 1 except that the first length L1 of the mixture starting end region of the negative electrode that was not opposed to the positive electrode mixture layer was a length of 0.4 turns.

### <Example 3>

A battery A3 was produced in the same manner as in Example 1 except that W1/W2 was 0.2.

### <Example 4>

A battery A4 was produced in the same manner as in Example 1 except that W1/W2 was *0.5.*

### <Example 5>

A battery A5 was produced in the same manner as in Example 1 except that W1/W2 was 0.7.

### <Example 6>

A battery A6 was produced in the same manner as in Example 1 except that W1/W2 was 0.8.

### <Example 7>

A battery A7 was produced in the same manner as in Example 1 except that the second length L2 of the positive electrode starting end region along the winding direction was a length of 0.1 turns.

### <Example 8>

A battery A8 was produced in the same manner as in Example 1 except that the second length L2 of the positive electrode starting end region along the winding direction was a length of 0.5 turns.

### <Example 9>

A battery A9 was produced in the same manner as in Example 1 except that the second length L2 of the positive electrode starting end region along the winding direction was a length of 0.8 turns.

### <Comparative Example 1>

A battery B1 was produced in the same manner as in Example 1 except that the positive electrode starting end region was not formed, and the first length L1 of the mixture starting end region of the negative electrode that was not opposed to the positive electrode mixture layer remained as a length of 0.8 turns.

### <Comparative Example 2>

A battery B2 was produced in the same manner as in Example 1 except that the positive electrode starting end region was not formed, and the first length L1 of the mixture starting end region of the negative electrode that was not opposed to the positive electrode mixture layer was a length of 0.4 turns.

### <Comparative Example 3>

A battery B3 was produced in the same manner as in Example 1 except that the positive electrode starting end region was not formed, and the first length L1 of the mixture starting end region of the negative electrode that was not opposed to the positive electrode mixture layer was a length of 1.2 turns.

### <Comparative Example 4>

A battery B4 was produced in the same manner as in Example 1 except that the first length L1 of the mixture starting end region of the negative electrode that was not opposed to the positive electrode mixture layer was a length of 0.3 turns.

### <Comparative Example 5>

A battery B5 was produced in the same manner as in Example 1 except that the first length L1 of the mixture starting end region of the negative electrode that was not opposed to the positive electrode mixture layer was a length of 1.2 turns.

### [Evaluation of Electrode Plate Deformation]

Each of the batteries of the examples and the comparative examples was charged at a constant current of 0.3 It until the battery voltage reached 4.2 V, and thereafter charged at a constant voltage of 4.2 V until the current reached 0.02 It. Thereafter, the battery was discharged at a constant current of 1.0 It until the battery voltage reached 2.7 V. With the charging and discharging taken as one cycle, 500 cycles of charging and discharging were performed with a rest period of 20 minutes interposed between the cycles.

The battery subjected to the 500 cycles was charged at a constant current of 0.3 It until the battery voltage reached 4.2 V, and thereafter charged until the voltage current of 4.2 V reached 0.02, thus bringing the battery into a charged state. For this secondary battery in the charged state, a cross section of a central portion in the winding axis direction of the electrode assembly in the vicinity of the positive electrode starting end was observed using an X-ray CT apparatus ("SMX-225CT FPD HR" manufactured by SHIMADZU CORPORATION). Then, the presence or absence of electrode plate deformation was evaluated as follows. The deformation was determined to be present if any bent portion having an angle of 150° or less was confirmed in at least one of the positive electrode and the negative electrode in the area of the positive electrode starting end region where the positive electrode and the negative electrode were opposed to each other. The number of evaluated batteries was 20.

### [Pin Extraction Failure Rate]

After a winding step of winding the positive electrode and the negative electrode around a winding pin with the separator interposed therebetween to produce the electrode assembly, in a step of extracting the pin, the ratio of failure due to winding misalignment of the electrode assembly caused as a result of the electrode assembly being caught on the pin was calculated. The number of evaluated batteries were 100.

**[Table 1]**

| | W1/W2 | L2 (turns) | L1 (turns) | Rate of occurrence of electrode plate deformation | Pin extraction failure rate (%) |
|---|---|---|---|---|---|
| | 0.3 | 0.2 | 0.8 | 1/20 | 2 |
| A2 | 0.3 | 0.2 | 0.4 | 0/20 | 3 |
| A3 | 0.2 | 0.2 | 0.8 | 3/20 | 2 |
| A4 | 0.5 | 0.2 | 0.8 | 1/20 | 3 |
| A5 | 0.7 | 0.2 | 0.8 | 1/20 | 4 |
| A6 | 0.8 | 0.2 | 0.8 | 1/20 | 6 |
| A7 | 0.3 | 0.1 | 0.8 | 1/20 | 6 |
| A8 | 0.3 | 0.5 | 0.8 | 1/20 | 1 |
| A9 | 0.3 | 0.8 | 0.8 | 1/20 | 0 |
| B1 | 0 | 0 | 0.8 | 1/20 | 20 |
| B2 | 0 | 0 | 0.4 | 0/20 | 29 |
| B3 | 0 | 0 | 1.2 | 9/20 | 1 |
| B4 | 0.3 | 0.2 | 0.3 | 0/20 | 17 |
| B5 | 0.3 | 0.2 | 1.2 | 8/20 | 1 |

For all of the batteries to A9 of Examples 1 to 9, the rate of occurrence of the electrode plate deformation was 3/20 or less, and thus the rate of the electrode plate deformation was low. In addition, the pin extraction failure rate was also low. The foregoing shows that, by simply providing a positive electrode starting end region having a W1/W2 ratio of less than 1, or setting the first length L1 to a length of 0.4 turns or more and 0.8 turns or less, it is not possible to achieve both the suppression of deformation of the positive and negative electrodes, and the suppression of pin extraction failure.

On the other hand, for the batteries B1, B2, and B4 of Comparative Examples 1, 2, and 4, the pin extraction failure rate was very high. For the batteries B3 and B5 of Comparative Examples 3 and 5, the rate of occurrence of the electrode plate deformation was very high. From these results, the configuration of the present disclosure suppresses pin extraction failure in the winding step, while suppressing deformation of the positive and negative electrodes in the vicinity of the positive electrode starting end with the progression of charge-discharge cycling.

### [Industrial Applicability]

A non-aqueous electrolyte secondary battery according to the present disclosure is useful, for example, as a main power source for a mobile communication device, a mobile electronic device, an electric automobile, and the like.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

### [Reference Signs List]

10: Secondary battery
11: Sealing body
12: Valve body
13: Metal plate
14: Insulating member
15: Positive electrode
15a: Positive electrode lead
   151: Positive electrode starting end
   152: Positive electrode starting end region
16: Negative electrode
16a: Negative electrode lead
   161: Negative electrode starting end
   162: Mixture starting end region
17: Separator
18: Electrode assembly
21: Gasket
22: Battery can
22a: Groove part
23: First insulating plate
24: Second insulating plate
113: First side
114: Second side
115: Third side

## Claims

1. A non-aqueous electrolyte secondary battery comprising:
a band-shaped positive electrode; a band-shaped negative electrode; a band-shaped separator; and a non-aqueous electrolyte, wherein
the positive electrode and the negative electrode are wound with the separator interposed therebetween, to form an electrode assembly,
the positive electrode includes a positive electrode core body, and a positive electrode mixture layer formed on a surface of the positive electrode core body,
the negative electrode includes a negative electrode core body, and a negative electrode mixture layer formed on a surface of the negative electrode core body,
the negative electrode mixture layer includes, on the negative electrode starting end side of the winding, a mixture starting end region that has a first length L1 along a winding direction and that is not opposed to the positive electrode mixture layer,
the positive electrode includes a positive electrode starting end region that has a second length L2 along the winding direction from the positive electrode starting end of the winding and that is opposed to the negative electrode,
a first width W1 of the positive electrode starting end is smaller than a maximum second width W2 of the positive electrode excluding the positive electrode starting end, and
the first length L1 is a length of 0.4 turns or more and 0.8 turns or less from the negative electrode starting end side.

2. The non-aqueous electrolyte secondary battery according to claim 1, wherein the positive electrode mixture layer is formed on the surface of the positive electrode core body from the positive electrode starting end.

3. The non-aqueous electrolyte secondary battery according to claim 1, wherein a ratio:W1/W2 of the first width W1 to the second width W2 is 0.3 or more and 0.7 or less.

4. The non-aqueous electrolyte secondary battery according to claim 1, wherein the second length L2 along the winding direction of the positive electrode starting end region that satisfies W2 > W1 is a length of 0.2 turns or more from the positive electrode starting end.
